(19) Europäisches Patentamt
European Patent Office
Office européen des brevets

(11) **EP 2 679 086 B1**

(12) **EUROPÄISCHE PATENTSCHRIFT**

(45) Veröffentlichungstag und Bekanntmachung des Hinweises auf die Patenterteilung:
**23.03.2016 Patentblatt 2016/12**

(51) Int Cl.:
***A01D 41/14*** *(2006.01)*

(21) Anmeldenummer: **13161513.0**

(22) Anmeldetag: **28.03.2013**

(54) **SELBSTFAHRENDE ERNTEMASCHINE MIT HÖHENGEREGELTEM SCHNEIDWERK**

SELF-PROPELLED HARVESTER WITH HEIGHT CONTROLLED CUTTING HEADER

MACHINE DE RÉCOLTE AUTOMOTRICE DOTÉE D'UN TÊTE DE COUPE RÉGLABLE EN HAUTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.06.2012 DE 102012012907**

(43) Veröffentlichungstag der Anmeldung:
**01.01.2014 Patentblatt 2014/01**

(73) Patentinhaber: **CLAAS Selbstfahrende Erntemaschinen GmbH
33428 Harsewinkel (DE)**

(72) Erfinder:
- **Kohlhase, Martin, Dr.
33428 Harsewinkel (DE)**
- **Wielenberg, Andreas
32049 Herford (DE)**

(56) Entgegenhaltungen:
**EP-A2- 0 786 200     DE-A1- 3 807 610
US-A- 5 704 200**

EP 2 679 086 B1

**Beschreibung**

Die vorliegende Erfindung betrifft eine selbstfahrende Erntemaschine wie etwa einen Mähdrescher, einen Feldhäcksler, eine Ballenpresse oder dergleichen, mit einem Schneidwerk, das in Bezug auf eine Karosserie der Erntemaschine mit Hilfe eines Stellglieds verstellbar ist, um Erntegut in einen im Wesentlichen gleichbleibenden Abstand vom Boden schneiden und bergen zu können, auch wenn der Boden, auf dem das Erntegut steht und die Erntemaschine sich bewegt, uneben ist.

Eine derartige Erntemaschine ist aus DE 38 07 610 A1 bekannt.

Bei dieser herkömmlichen Erntemaschine ist das Schneidwerk oder der Mähtisch an seinen seitlichen Enden mit um eine Achse schwenkbaren, elastisch gegen den Boden gedrückten Tastbügeln ausgestattet, deren Stellung Auskunft gibt über den Abstand des Schneidwerks von dem durch die Tastbügel berührten Boden und zu deren Erfassung jeweils ein Höhensensor vorgesehen ist. Ein rechtes und ein linkes Stellglied stützen das Schneidwerk an der Karosserie ab. An jedes dieser Stellglieder ist jeweils ein Potentiometer gekoppelt, dessen Stellung abhängig ist von der von dem betreffenden Stellglied auf das Schneidwerk ausgeübten Stützkraft. Solange sich die Erntemaschine auf ebenem Untergrund bewegt, ist die Stützkraft konstant.

Weiterhin ist aus der EP 0 786 200 A2 eine Vorrichtung zur Regelung der Lage einer Bearbeitungseinheit einer landwirtschaftlichen Maschine bekannt, die einen Abstandssensor, der den Abstand der Bearbeitungseinheit vom Boden erfasst, sowie einen Drucksensor aufweist, der die in einem vorzugsweise hydraulischen oder pneumatischen Steuerelement für die Lage der Bearbeitungseinheit auftretenden Drücke misst und die ein Regelgerät enthält, das unter Vorgabe mindestens eines Sollwerts und unter Auswertung der Sensorausgangssignale die Steuerelemente zur Einstellung des Bodenabstands und/oder des Auflagedrucks betätigt, wobei Signalwerte für den maximalen Zylinderdruck des Steuerelements bei angehobener Bearbeitungseinheit und/oder den Bodenabstand bei einer waagerechten Auflage der Bearbeitungseinheit auf dem Boden jeweils in einem nichtflüchtigen Speicher im Regelgerät hinterlegt werden und dass aus diesen Signalen und den gemessenen Istsignalen Korrekturwerte für das jeweilige Sollwertsignal ableitbar sind.

In der Praxis ist der Boden, auf dem sich die Erntemaschine bewegt, mehr oder weniger uneben. Wenn der Boden eine Erhebung aufweist, deren Abmessungen quer zur Fahrrichtung gering sind, dann kann die Vorderkante des Schneidwerks mit der Erhebung zusammenstoßen, ohne dass diese von einem der Bodenabtastbügel erfasst worden wäre. Ein Anstoßen des Schneidwerks ist auch möglich, wenn die Erhebung so steil ist, dass die Vorderkante des Schneidwerks dagegen stößt, bevor einer der Bodenabtastbügel die Erhebung erreicht hat und von ihr ausgelenkt worden ist.

Jeder Kontakt des Schneidwerks mit einer Bodenerhebung führt zu einer Verringerung der von den Stellgliedern auf das Schneidwerk ausgeübten Stützkraft. Diese Verringerung wird mit Hilfe von an den Stellgliedern angeordneten Bodendruck-Potentiometern erfasst. Eine Steuervorrichtung empfängt ein aus Messsignalen der Höhensensoren und der Bodendruck-Potentiometer additiv zusammengesetztes Istwertsignal und steuert anhand dieses Signals ein hydraulisches Stellglied an. Die additive Überlagerung der Signale von Höhensensoren und Bodendruck-Potentiometern ermöglicht es, das Schneidwerk so nachzuführen, dass die Bodenerhebung überwunden wird, auch wenn diese von den Höhensensoren nicht erfasst wird.

Ein Problem dieser herkömmlichen Erntemaschine ist darin begründet, dass Nickbewegungen, die die Erntemaschine beim Überfahren von Bodenunebenheiten ausführt, ebenfalls einen erheblichen Einfluss auf die von den Bodendruck-Potentiometern erfassten Stützkräfte haben. Derartige Nickbewegungen werden aber erst angeregt, wenn die Räder der Erntemaschine über eine Bodenunebenheit hinwegrollen, d.h. wenn das Schneidwerk die Bodenunebenheit bereits passiert hat. Wenn die Steuereinheit versuchen würde, den von einer solchen Nickbewegung verursachten Stützkraftschwankungen entgegenzuregeln, dann besteht die Gefahr, dass dadurch verursachte Höhenausschläge des Schneidwerks wiederum zu einem Bodenkontakt oder, im günstigsten Fall, zu unerwünschten Schnitthöhenschwankungen nach Überwinden der Bodenunebenheit führen. Um diese Gefahr zu vermeiden, darf die Reaktionsgeschwindigkeit der herkömmlichen Steuereinheit nicht zu hoch sein. Je geringer jedoch die Reaktionsgeschwindigkeit ist, umso höher ist die Wahrscheinlichkeit, dass das Schneidwerk eine Bodenerhebung berührt, weil seine Höhe, auch wenn die Bodenerhebung von den Bodenabtastbügeln erfasst wurde, nicht rechtzeitig nachgeführt werden konnte. Mit der herkömmlichen Technik ist also bestenfalls ein Kompromiss zwischen den einander zuwiderlaufenden Anforderungen nach Stabilität und hoher Reaktionsgeschwindigkeit zu erreichen.

Die in der herkömmlichen Steuerschaltung eingesetzten Vergleicher haben zur zwei Ausgangszustände, und dementsprechend sind die von ihnen gesteuerten, die Stellglieder mit Hydraulikfluid versorgenden Ventile entweder offen oder geschlossen. Wenn sich das Fahrzeug einer Bodensenke nähert und die Bodenabtastbügel eine Erhöhung der Schnitthöhe erfassen, muss das Schneidwerk abgesenkt werden, und wenn die Steuerschaltung zu diesem Zweck Ventile öffnet, über die Hydraulikfluid aus den Stellgliedern abfließt, resultiert eine heftige Druckverminderung, die an den Bodendruck-Potentiometern zunächst nicht zu unterscheiden ist von einer durch Bodenkontakt des Schneidwerks verursachten Entlastung. Um dieser Entlastung entgegenzuwirken, muss die Steuerschaltung das Schneidwerk anheben. Dadurch verzögert sich die Reaktion auf die Änderung der Schnitthöhe.

Aufgabe der Erfindung ist, eine Erntemaschine bzw. ein Verfahren zum Steuern des Schneidwerks einer Erntemaschine anzugeben, die es erlauben, die Anforderungen nach Stabilität und hoher Reaktionsgeschwindigkeit besser als bisher miteinander zu vereinbaren.

Die Aufgabe wird durch die Merkmale des Anspruches 1 gelöst. Indem bei einer selbstfahrenden Erntemaschine mit einem Schneidwerk, wenigstens einem hydraulischen Stellglied zum Einstellen der Schnitthöhe des Schneidwerks, wenigstens einem Höhensensor zum Erfassen der Schnitthöhe, wenigstens einem Drucksensor zum Erfassen des hydraulischen Drucks am Stellglied und einer Steuereinheit zum Ansteuern des Stellglieds anhand von Messwerten des Höhensensors und des Drucksensors, die Steuereinheit gegliedert ist in einen ersten Regelkreis zum Erzeugen eines Höhenkorrektursignals anhand der vom Höhensensor erfassten Ist-Schnitthöhe und einer Soll-Schnitthöhe und einen zweiten Regelkreis, dessen Sollwert Änderungen des Höhenkorrektursignals folgt. Der an dem hydraulischen Stellglied wirkende Druck kann, wenn Bedarf nach einer Anpassung besteht, sehr schnell nachgeführt werden, ohne das Schneidwerk zu destabilisieren, da eine Druckerhöhung oder - erniedrigung nicht unmittelbar eine dazu proportionale Höhenänderung des Schneidwerks nach sich zieht, sondern lediglich die Geschwindigkeit bestimmt, mit der Hydraulikfluid zum Stellglied hin oder von ihm abfließt und damit die Geschwindigkeit, mit der sich die Höhe des Schneidwerks ändert. Außerdem können Nickbewegungen der Erntemaschine und daraus resultierende Schwankungen des Ist-Drucks ausgeregelt werden, ohne dass dies eine Auswirkung auf den ersten Regelkreis hat. Daher besteht keine Gefahr, dass das Höhenkorrektursignal durch eine schnelle Steuerung des Drucks instabil wird.

Eine schnelle, deutliche Reaktion des zweiten Regelkreises auf Sollwert-Abweichungen des Drucks ist erfindungsgemäß dadurch erreichbar, dass der zweite Regelkreis als Proportionalregler ausgebildet ist.

Der erste Regelkreis hingegen ist erfindungsgemäß zwischen einem Proportionalregler- und einem Proportional-Integralportionalregler- und einem Proportional-Integral-Reglermodus umschaltbar. Der erste Regelkreis hat erfindungsgemäß auch einen Rückkoppeleingang, der mit dem Ausgang des zweiten Regelkreises verbunden ist, und ist eingerichtet, einen Integralanteil des Höhenkorrektursignals einzufrieren, wenn das vom zweiten Regelkreis ausgegebene Druckkorrektursignal einen vorgegebenen Grenzwert erreicht. Dies trägt der Tatsache Rechnung, dass, wenn ein mit dem Druckkorrektursignal angesteuertes Ventil einen vollständig geöffneten Zustand erreicht hat, eine weitere Steigerung des Höhenkorrektursignals durch dessen Integralanteil nicht mehr zu einer Beschleunigung der Verstellung des Stellgliedes führen kann. Würde man in diesem Zustand eine weitere Steigerung des Integralanteils zulassen, dann müsste dieser zu einem späteren Zeitpunkt auch allmählich wieder abgebaut werden, und eine Reaktion des Ventils würde erst mit einer gewissen Verzögerung erfolgen, wenn das Druckkorrektursignal den Grenzwert wieder unterschreitet. Eine solche Verzögerung kann durch das Einfrieren des Integralanteils vermieden oder zumindest eingeschränkt werden. Vorzugsweise steuert der zweite Regelkreis das Stellglied über wenigstens ein Proportionalventil, d.h. ein Ventil, dessen Durchgangswiderstand proportional zum angelegten Druckkorrektursignal ist.

Um die Zeitverzögerung zwischen einer Änderung des Druckkorrektursignals und der Reaktion des Proportionalventils darauf zu minimieren, ist es zweckmäßig, wenn das Proportionalventil im geschlossenen Zustand vorbestromt ist.

Die Soll-Schnitthöhe des Schneidwerks sollte durch einen Benutzer an einem Eingabemittel einstellbar sein. Ein solches Eingabemittel kann sehr abrupte Änderungen der Soll-Schnitthöhe ermöglichen, die wiederum schnelle Änderungen des Drucks am Stellglied nach sich ziehen können. Wenn bei Erreichen der neuen Soll-Schnitthöhe der Ab- oder Zufluss von Hydraulikfluid am Stellglied abrupt gestoppt wird, kann die daraus resultierende Verzögerung des Stellgliedes zu heftigen, das Material belastenden Druckspitzen und zu Nickbewegungen der Maschine führen. Um diese zu vermeiden, kann ein Soll-Schnitthöheneingang des ersten Regelkreises mit dem Eingabemittel zweckmäßigerweise über ein Tiefpassfilter verbunden sein.

Die Aufgabe wird ferner gelöst durch ein Verfahren zum Steuern eines Schneidwerks einer selbstfahrenden Erntemaschine mit den Schritten:

a) Erfassen der Ist-Schnitthöhe des Schneidwerks und Ableiten eines Höhenkorrektursignals anhand der Ist-Schnitthöhe und einer Soll-Schnitthöhe;
b) Erfassen des Ist-Drucks an einem das Schneidwerk stützenden hydraulischen Stellglied und Ableiten eines Druckkorrektursignals anhand des Ist-Drucks, eines Soll-Drucks und des Höhenkorrektursignals;
c) Regeln des Drucks am hydraulischen Stellglied anhand des Druckkorrektursignals, wobei ein Integralanteil des Höhenkorrektursignals eingefroren wird, wenn das Druckkorrektursignal einen vorgegebenen Grenzwert erreicht.

Vorzugsweise wird in Schritt c) der Durchsatz wenigstens eines Proportionalventils proportional zum Druckkorrektursignal gesteuert.

Weitere Merkmale und Vorteile der Erfindung ergeben sich aus der nachfolgenden Beschreibung von Ausführungsbeispielen unter Bezugnahme auf die beigefügten Figuren. Es zeigen:

Fig. 1　eine erfindungsgemäße selbstfahrende Erntemaschine in ausschnittweiser perspektivischer Ansicht; und

Fig. 2 ein Blockdiagramm einer Steuervorrichtung für die Höhensteuerung des Schneidwerks der Erntemaschine.

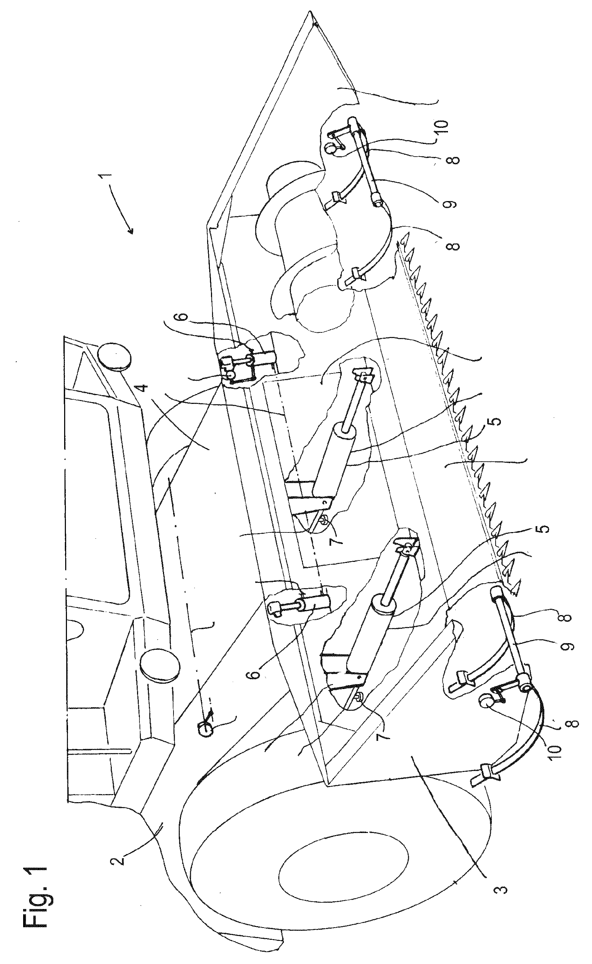

Fig. 1 zeigt eine erfindungsgemäße selbstfahrende Erntemaschine 1, hier einen Mähdrescher, in einer ausschnittweisen perspektivischen Ansicht. Zu sehen sind ein vorderer Teil einer Karosserie 2 und ein Schneidwerk 3, das mit der Karosserie 2 über einen Schrägförderer 4 verbunden ist. Die Neigung des Schrägförderers und damit die Höhe des Schneidwerks 3 über dem Boden ist mit Hilfe von zwei hydraulischen Stellgliedern 5 einstellbar, die einerseits an der Karosserie 2, andererseits an einem vorderen Ende des Schrägförderers 4 angreifen. Drucksensoren 7 sind, wie in der Figur dargestellt, an zu den Stellgliedern 5 führenden Versorgungsleitungen oder unmittelbar an einer Kammer jedes Stellglieds 5 angeordnet, um den Druck des Hydraulikfluids in den Kammern der Stellglieder 5 zu erfassen. Weitere Stellglieder 6 sind in an sich bekannter Weise zwischen dem Schrägförderer 4 und dem Schneidwerk 3 angeordnet, um das Schneidwerk 3 um eine nicht dargestellte, in Fahrtrichtung verlaufende Achse zu schwenken.

An einer linken und rechten Seite des Schneidwerks 3 sind unter eine Bodenplatte nach unten vorspringende Tastbügel 8 um eine von einer Welle 9 festgelegte Achse schwenkbar montiert. Die Bodenplatte ist teilweise weggeschnitten dargestellt, um die Tastbügel 8 zeigen zu können. Höhensensoren 10 sind an beiden Seiten des Schneidwerks 3 an die Wellen 9 gekoppelt, um anhand der Stellung der Tastbügel 8 den Abstand des Schneidwerks 3 vom Boden zu erfassen.

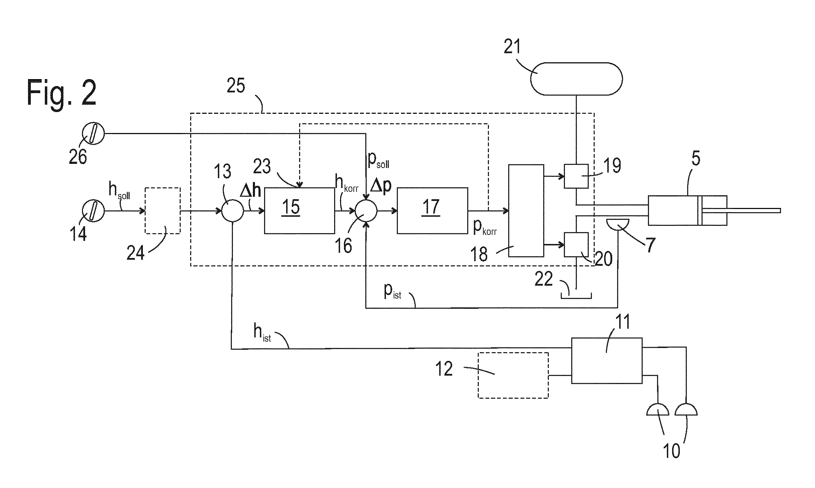

Fig. 2 zeigt ein Blockdiagramm einer Steuereinheit 25, die die Signale der Sensoren 7, 10 auswertet, um die Stellglieder 5 zu steuern. Die rechten und linken Höhensensoren 10 sind an eine erste Recheneinheit 11 angeschlossen, die aus den eventuell unterschiedlichen Messwerten der zwei Sensoren 10 einen Mittelwert bildet und diesen als Ist-Schnitthöhe $h_{ist}$ über einem ersten Ausgang an die Steuereinheit 25 ausgibt. Die Recheneinheit 11 kann noch einen zweiten Ausgang für ein von der Differenz der Messwerte der Höhensensoren 10 abgeleitetes Signal haben, das von einer hier nicht weiter im Detail beschriebenen Steuereinheit 12 genutzt wird, um die Stellglieder 6 anzusteuern und so eine Drehung des Schneidwerks 3 um die zur Fahrtrichtung parallele Achse anzutreiben, die die Differenz zwischen den Messwerten der Höhensensoren 10 minimiert.

Die Steuereinheit 25 kann ein Mikroprozessor sein, in dem die im folgenden beschriebenen Untereinheiten der Steuereinheit 25 jeweils in Form von Unterprogrammen implementiert sind; alternativ können die Untereinheiten oder wenigstens einige von ihnen als diskrete Schaltungen aufgebaut sein. Eine Differenzen bildende Rechenschaltung 13, z.B. ein Operationsverstärker, empfängt das Ist-Schnitthöhensignal $h_{ist}$ von der Recheneinheit 11 sowie ein Soll-Schnitthöhensignal $h_{soll}$, das vom Fahrer der Erntemaschine an einem in der Fahrerkabine angebrachten Eingabemittel 14 eingestellt worden ist. Die Differenz $\Delta h = h_{ist}-h_{soll}$ wird von der Rechenschaltung 13 weitergegeben an einen ersten Regelkreis 15, der hier als PI-Regler ausgebildet ist, d.h. er liefert ein Höhenkorrektursignal mit einem Proportional- und einem Integralanteil in der Form

$$h_{korr} = a\Delta h + b\int \Delta h\, dt \ ,$$

wobei a, b geeignet festgelegte Konstanten sind. (Weitere, in anderer Weise als proportional oder integral von $\Delta h$ abhängige Terme können im Höhenkorrektursignal enthalten sein.)

In einer weiteren Rechenschaltung 16 wird eine Differenz zwischen dem Höhenkorrektursignal $h_{korr}$ und einem von den Drucksensoren 7 der Stellglieder 5 gelieferten Druck-Istwert $p_{ist}$ gebildet und als Druckabweichungssignal $\Delta p$ an einen zweiten Regelkreis 17 übergeben.

Der zweite Regelkreis 17, der das Druckabweichungssignal $\Delta p$ in ein Druckkorrektursignal $p_{korr}$ umwandelt, kann als reiner oder im Wesentlichen reiner Proportionalregler ausgebildet sein, um das Druckkorrektursignal $p_{korr}$ jeder Änderung des Ist-Drucks $p_{ist}$ oder des Höhenkorrektursignals $h_{korr}$ mit hoher Geschwindigkeit nachführen zu können.

Eine Ventiltreiberschaltung 18 ist mit dem Ausgang des zweiten Regelkreises 17 verbunden, um das Druckkorrektursignal $p_{korr}$ zu empfangen. Anhand des Druckkorrektursignals $p_{korr}$ steuert die Ventiltreiberschaltung 18 zwei Proportionalventile 19, 20, von denen das eine, 19, zwischen einem Hochdruckreservoir 21 und einem der Stellglieder 5 und das andere, 20, zwischen dem Stellglied 5 und einem drucklosen Tank 22 für Hydraulikfluid angeordnet ist. Der Drucksensor 7 ist hier an einer Leitungsabschnitt zwischen dem Stellglied 5 und dem Proportionalventil 20 dargestellt, er könnte sich genauso gut an einem Leitungsabschnitt zwischen dem Proportionalventil 19 und dem Stellglied 5 oder unmittelbar an einer Kammer des Stellglieds 5 befinden.

Die Proportionalventile 19, 20 sind Magnetventile, deren Öffnungsgrad abhängig ist von der durch die Ventiltreiberschaltung 18 in sie eingespeisten Stromstärke. Solange diese unter einer von der Bauart der Ventile 19, 20 abhängigen unteren Grenzstromstärke liegt, sind die Ventile 19, 20 geschlossen; wird die Grenzstromstärke überschritten, dann wächst der Fluiddurchsatz der Ventile 19, 20 kontinuierlich mit der Stromstärke an. Wenn $p_{korr} = 0$ ist, hält die Treiberschaltung 18 beide Ventile 19, 20 geschlossen, beaufschlagt dabei aber beide mit der Grenzstromstärke, so dass, wenn $p_{korr}$ von 0 abweicht, nicht erst ein Magnetfeld in dem dann zu öffnenden Ventil 19, 20 aufgebaut werden muss und die Induktivität der Magnetventile die Steigerung der eingespeisten Stromstärke verzögert, sondern der Öffnungsgrad des Ventils 19 oder 20 einer Änderung der eingespeisten Stromstärke mit minimaler Verzögerung folgen kann. So öffnet die Treiberschaltung 18, wenn $p_{korr} > 0$ ist, das Ventil 19, während das Ventil 20 geschlossen bleibt, und ein daraus resultierender Fluss des Hydraulikfluids vom Hochdruckreservoir 21 bewirkt eine schnelle Steigerung des Drucks im Stellglied 5 und, wenn diese längere Zeit anhält, ein Ausfahren des Stellglieds 5 und ein Anheben des Schneidwerks 3. Umgekehrt hält die Treiberschaltung 18 bei $p_{korr} < 0$ das Ventil 19 geschlossen und öffnet das Ventil 20, so dass der Druck am Stellglied 5 schnell abnimmt, das Stellglied 5 einfährt und das Schneidwerk 3 absinkt.

Es gibt einen oberen Grenzwert der in das Proportionalventil 19, 20 eingespeisten Stromstärke, bei dem das Ventil 19 bzw. 20 vollständig geöffnet ist, so dass eine weitere Steigerung der Stromstärke nicht mehr zur Steigerung des Flusses durch das Ventil führt. Dementsprechend gibt es einen oberen, positiven Grenzwert $p_{korr,max}$ und einen unteren, negativen Grenzwert $p_{korr,min}$ für $p_{korr}$, deren Überschreitung auf den Durchsatz des Ventils 19 bzw. 20 keinen Einfluss hat. Im Falle einer lang anhaltenden Abweichung zwischen Soll- und Ist-Schnitthöhe $h_{soll}$, $h_{ist}$ kann der Integralanteil im Höhenkorrektursignal $h_{korr}$ des ersten Regelkreises 15 so groß werden, dass $p_{korr}$ das Intervall $[p_{korr,min}, p_{korr,max}]$ dieser Grenzwerte verlässt. Wenn zu einem späteren Zeitpunkt die Schnitthöhenabweichung $\Delta h$ ihr Vorzeichen ändert, kann einige Zeit verstreichen, bis der Integralanteil so weit abgeklungen ist, dass $p_{korr}$ wieder in das Intervall zurückkehrt. So lange bleibt das Ventil 19 oder 20 maximal geöffnet. Ein aus dieser Verzögerung resultierendes Überschwingen des Schneidwerks 3 kann reduziert werden, indem der Gewichtungsfaktor b des Integralterms nicht, wie oben angegeben, als Konstante angenommen wird, sondern als eine Funktion des auf einen Rückkoppeleingang 23 des ersten Regelkreises 15 rückgeführten Druckkorrektursignals $p_{korr}$: im einfachsten Fall hat b einen konstanten, von 0 verschiedenen Wert, solange $p_{korr}$ innerhalb des Intervalls $[p_{korr,min}, p_{korr,max}]$ liegt, und den Wert 0, wenn $p_{korr}$ außerhalb dieses Intervalls liegt. Auf diese Weise wird eine Änderung des Integralterms gleichermaßen eingefroren, wenn $p_{korr}$ die Grenzen des Intervalls erreicht hat. So wirkt sich ein Vorzeichenwechsel von $\Delta h$ unverzüglich auf $p_{korr}$ und auf den Öffnungsgrad der Ventile 19, 20 aus.

Das Eingabemittel 14, bei dem es sich z.B. um einen Schalter, einen Schieberegler oder dergleichen handeln kann, ermöglicht dem Fahrer ein schnelles Umschalten der Soll-Schneidhöhe. Um das Schneidwerk 3 absetzen und von der Erntemaschine 1 abmontieren zu können, muss die Soll-Schneidhöhe auf 0 gesetzt werden, d.h. das Schneidwerk 3 muss den Boden berühren. Wenn der Fahrer zu diesem Zweck am Eingabemittel 14 $h_{soll}$ auf 0 schaltet, während das Schneidwerk 3 über dem Boden gehalten ist, springt die Höhenabweichung $\Delta h$ abrupt auf einen stark von 0 verschiedenen Wert, der sich über den Proportionalanteil in der Ausgabe des ersten Regelkreises 15 und den im Wesentlichen rein proportional arbeitenden zweiten Regelkreis 17 schnell auf das Druckkorrektursignal $p_{korr}$ auswirkt und dazu führt, dass das Druckkorrektursignal $p_{korr}$ stark negativ wird. Die Treiberschaltung 18 öffnet daraufhin weit das Ventil 20, und das Schneidwerk 3 sinkt schnell ab. Erst wenn das Schneidwerk 3 den Boden erreicht hat, wird $\Delta h$ wieder 0. Um zu verhindern, dass in einem solchen Fall das Schneidwerk 3 ungebremst auf den Boden prallt, ist einer bevorzugten Weiterbildung zufolge zwischen dem Eingabemittel 14 und der Rechenschaltung 13 ein Tiefpassfilter 24 vorgesehen. Unabhängig davon, wie schnell die Umschaltung der Sollhöhe am Eingabemittel 14 stattfindet, bewirkt der Tiefpassfilter 24, dass der am Eingang der Rechenschaltung 13 anliegende Sollwert sich dem vom Benutzer eingestellten langsam annähert. Infolgedessen kann $\Delta h$ bereits sehr kleine Werte annehmen oder sogar sein Vorzeichen ändern, bevor das Schneidwerk 3 Bodenkontakt hat, mit der Folge, dass es sich dem Boden langsam nähert und ein hartes Aufsetzen vermieden wird.

In der hier gezeigten Ausgestaltung hat die Rechenschaltung 16 ferner einen Eingang für ein Solldruck-Signal $p_{soll}$, das der Fahrer an einem zweiten Eingabemittel 26 einstellt.

Solange das Schneidwerk 3 keinen Bodenkontakt hat, ist der Einfluss eines am zweiten Eingabemittel 26 eingestellten Solldrucks $p_{soll}$ auf die Funktion der Steuereinheit 25 gering. Wenn nämlich die Höhe $h_{ist}$ des Schneidwerks 3 unter dem Sollwert $h_{soll}$ ist, wächst durch den Integralanteil das Höhenkorrektursignal $h_{korr}$ kontinuierlich an. In der Folge steigt auch $p_{korr}$ so lange, bis der Druck im Stellglied 5 ausreicht, um das Schneidwerk 3 anzuheben. Die hierfür beim Start der Steuereinheit 25 benötigte Zeit kann zwar verkürzt werden, indem an den Eingang der Rechenschaltung ein Sollwert $p_{soll}$ eingegeben wird, der in etwa dem Druck entspricht, der erforderlich ist, um das Schneidwerk im Gleichgewicht zu halten, doch auf die letztlich eingestellte Höhe des Schneidwerks 3 hat $p_{soll}$ keinen Einfluss, und auch die Reaktionsgeschwindigkeit der Steuereinheit im laufenden Betrieb hängt nicht von $p_{soll}$ ab. Lediglich wenn die Soll-Schneidhöhe $h_{soll}=0$ eingestellt ist und das Schneidwerk 3 Bodenkontakt hat, kann mit Hilfe von $p_{soll}$ der vom Schneidwerk 3 auf den Boden ausgeübte Druck geregelt werden. Gleichzeitig kann in diesem Betriebszustand der erste Regelkreis von Proportional-Integral- auf Proportionalbetrieb umgeschaltet sein.

**Bezugszeichen**

1 Erntemaschine
2 Karosserie
3 Schneidwerk
4 Schrägförderer
5 Stellglied
6 Stellglied

| | |
|---|---|
| 7 | Drucksensor |
| 8 | Tastbügel |
| 9 | Welle |
| 10 | Höhensensor |
| 11 | Recheneinheit |
| 12 | Steuereinheit |
| 13 | Differenzschaltung (Rechenschaltung) |
| 14 | Eingabemittel |
| 15 | 1. Regelkreis |
| 16 | Rechenschaltung |
| 17 | 2. Regelkreis |
| 18 | Ventiltreiberschaltung |
| 19 | Proportionalventil |
| 20 | Proportionalventil |
| 21 | Hochdruckreservoir |
| 22 | Tank |
| 23 | Rückkoppeleingang |
| 24 | Tiefpassfilter |
| 25 | Steuereinheit |
| 26 | Eingabemittel |

**Patentansprüche**

1. Selbstfahrende Erntemaschine (1) mit einem Schneidwerk (3), wenigstens einem hydraulischen Stellglied (5) zum Einstellen der Schnitthöhe des Schneidwerks (3), wenigstens einem Höhensensor (10) zum Erfassen der Schnitthöhe, wenigstens einem Drucksensor (7) zum Erfassen des hydraulischen Drucks am Stellglied (5) und einer Steuereinheit (25) zum Ansteuern des Stellgliedes (5) anhand von Messwerten des Höhensensors (10) und des Drucksensors (7), wobei die Steuereinheit (25) einen ersten Regelkreis (15) zum Erzeugen eines Höhenkorrektursignals ($h_{korr}$) anhand der vom Höhensensor (10) erfassten Ist-Schnitthöhe ($h_{ist}$) und einer Soll-Schnitthöhe ($h_{soll}$) und einen zweiten Regelkreis (17) zum Regeln des Drucks am Stellglied (5) umfasst, dessen Sollwert Änderungen des Höhenkorrektursignals folgt, **dadurch gekennzeichnet, dass** der zweite Regelkreis (17) als Proportionalregler ausgebildet ist, dass der erste Regelkreis (15) zwischen einem Proportionalregler- und einem Proportional-Integral-Reglerbetriebsmodus umschaltbar ist, und dass der erste Regelkreis (15) einen mit dem Ausgang des zweiten Regelkreises (17) verbundenen Rückkoppeleingang (23) aufweist und eingerichtet ist, einen Integralanteil des Höhenkorrektursignals ($h_{korr}$) einzufrieren, wenn das Druckkorrektursignal ($p_{korr}$) einen vorgegebenen Grenzwert erreicht.

2. Selbstfahrende Erntemaschine nach Anspruch 1, **dadurch gekennzeichnet, dass** der zweite Regelkreis (17) eine kürzere Reaktionszeit aufweist als der erste Regelkreis (15).

3. Selbstfahrende Erntemaschine nach einem der vorhergehenden Ansprüche, **dadurch gekennzeichnet, dass** der zweite Regelkreis (17) das Stellglied (5) über wenigstens ein Proportionalventil (19, 20) ansteuert.

4. Selbstfahrende Erntemaschine nach Anspruch 3, **dadurch gekennzeichnet, dass** das Proportionalventil (19, 20) im geschlossenen Zustand vorbestromt ist.

5. Selbstfahrende Erntemaschine nach einem der vorhergehenden Ansprüche, **dadurch gekennzeichnet, dass** ein Eingabemittel (14), an dem die Soll-Schnitthöhe ($h_{soll}$) durch einen Benutzer einstellbar ist, und ein Soll-Schnitthöheneingang des ersten Regelkreises (15) über ein Tiefpassfilter (24) verbunden sind.

6. Verfahren zum Steuern eines Schneidwerks (3) einer selbstfahrenden Erntemaschine (1) mit den Schritten:

    a) Erfassen der Ist-Schnitthöhe ($h_{ist}$) des Schneidwerks (3) und Ableiten eines Höhenkorrektursignals ($h_{korr}$) anhand der Ist-Schnitthöhe und einer Soll-Schnitthöhe ($h_{soll}$);
    b) Erfassen des Ist-Drucks ($p_{ist}$) an einem das Schneidwerk (3) stützenden hydraulischen Stellglied (5) und Ableiten eines Druckkorrektursignals ($p_{korr}$) anhand des Ist-Drucks ($p_{ist}$), eines Soll-Drucks ($p_{soll}$) und des Höhenkorrektursignals ($h_{korr}$);
    c) Regeln des Drucks am hydraulischen Stellglied (5) anhand des Druckkorrektursignals ($p_{korr}$), wobei ein Integralanteil des Höhenkorrektursignals ($h_{korr}$) eingefroren wird, wenn das Druckkorrektursignal ($p_{korr}$) einen vorgegebenen Grenzwert erreicht.

7. Verfahren nach Anspruch 6, **dadurch gekennzeichnet, dass** in Schritt c) der Durchsatz wenigstens eines Proportionalventils (19, 20) proportional zum Druckkorrektursignal ($p_{korr}$) gesteuert wird.

**Claims**

1. A self-propelled harvester (1) comprising a header (3), at least one hydraulic adjusting member (5) for adjusting the cutting height of the header (3), at least one height sensor (10) for detecting the cutting height, at least one pressure sensor (7) for detecting the hydraulic pressure at the adjusting member (5), and a control unit (25) for actuating the adjusting member (5) on the basis of measurement values of the height sensor (10) and the pressure sensor (7), wherein the control unit (15) comprises a first closed-loop control circuit (15) for producing a height correction signal ($h_{korr}$) on the basis of the actual cutting height ($h_{ist}$) detected by the height sensor (10) and a target cutting height ($h_{soll}$) and a second closed-loop control circuit (17) for regulating the pressure at the adjusting member (5), whose target value follows changes in the height correction signal, **characterised in that** the second closed-loop control circuit (17) is in the form of a proportional controller, the first closed-loop control circuit (15) can be switched over between a proportional controller and a proportional integral controller operating mode and the first closed-loop control circuit (15) has a feedback input (23) connected to the output of the second closed-loop control circuit (17) and is adapted to freeze an integral component of the height correction signal ($h_{korr}$) when the pressure correction signal ($p_{korr}$) reaches a predetermined limit value.

2.  A self-propelled harvester according to claim **characterised in that** the second closed-loop control circuit (17) has a shorter reaction time than the first closed-loop control circuit (15).

3.  A self-propelled harvester according to one of the preceding claims **characterised in that** the second closed-loop control circuit (17) actuates the adjusting member (5) by way of at least one proportional valve (19, 20).

4.  A self-propelled harvester according to claim 3 **characterised in that** the proportional valve (19, 20) is power-biased in the closed condition.

5.  A self-propelled harvester according to one of the preceding claims **characterised in that** an input means (14) at which the target cutting height ($h_{soll}$) is adjustable by a user and a target cutting height input of the first closed-loop control circuit (15) are connected by way of a low-pass filter (24).

6.  A method of controlling a header (3) of a self-propelled harvester (1) comprising the steps:

    a) detecting the actual cutting height ($h_{ist}$) of the header (3) and deriving a height correction signal ($h_{korr}$) on the basis of the actual cutting height and a target cutting height ($h_{soll}$);
    b) detecting the actual pressure ($p_{ist}$) at a hydraulic adjusting member (5) supporting the header (3) and deriving a pressure correction signal ($p_{korr}$) on the basis of the actual pressure ($p_{ist}$), a target pressure ($p_{soll}$) and the height correction signal ($h_{korr}$);
    c) regulating the pressure at the hydraulic adjusting member (5) on the basis of the pressure correction signal ($p_{korr}$), wherein an integral component of the height correction signal ($h_{korr}$)

is frozen when the pressure correction signal ($p_{korr}$) reaches a predetermined limit value.

7.  A method according to claim 6 **characterised in that** in step c) the through-put of at least one proportional valve (19, 20) is controlled proportionally to the pressure correction signal ($p_{korr}$).

## Revendications

1.  Machine de récolte automotrice (1) comprenant un tablier de coupe (3), au moins un organe d'actionnement hydraulique (5) pour régler la hauteur de coupe du tablier de coupe (3), au moins un capteur de hauteur (10) pour détecter la hauteur de coupe, au moins un capteur de pression (7) pour détecter la pression hydraulique au niveau de l'organe d'actionnement (5), et une unité de commande (25) pour commander l'organe d'actionnement (5) à l'aide de valeurs mesurées du capteur de hauteur (10) et du capteur de pression (7), l'unité de commande (25) comprenant un premier circuit régulateur (15), pour produire un signal de correction de hauteur ($h_{korr}$) à l'aide de la hauteur de coupe réelle ($h_{ist}$) détectée par le capteur de hauteur (10) et d'une hauteur de coupe de consigne ($h_{soll}$), et, pour réguler la pression au niveau de l'organe d'actionnement (5), un second circuit régulateur (17) dont la valeur de consigne suit les variations du signal de correction de hauteur, **caractérisée en ce que** le second circuit régulateur (17) est conformé en régulateur proportionnel, **en ce que** le premier circuit régulateur (15) est commutable entre un mode de fonctionnement de régulateur proportionnel et un mode de fonctionnement de régulateur proportionnel et intégral, et **en ce que** le premier circuit régulateur (15) comporte une entrée de couplage rétroactif (23) reliée à la sortie du second circuit régulateur (17) et est conçu pour geler une partie intégrale du signal de correction de hauteur ($h_{korr}$) lorsque le signal de correction de pression ($p_{korr}$) atteint une valeur limite prédéfinie.

2.  Machine de récolte automotrice selon la revendication 1, **caractérisée en ce que** le second circuit régulateur (17) présente un temps de réaction plus court que le premier circuit régulateur (15).

3.  Machine de récolte automotrice selon une des revendications précédentes, **caractérisée en ce que** le second circuit régulateur (17) commande l'organe d'actionnement (5) par l'intermédiaire d'au moins un distributeur proportionnel (19, 20).

4.  Machine de récolte automotrice selon la revendication 3, **caractérisée en ce que**, à l'état fermé, le distributeur proportionnel (19, 20) est préalimenté électriquement.

**5.** Machine de récolte automotrice selon une des revendications précédentes, **caractérisée en ce qu'**un moyen d'entrée (14), par l'intermédiaire duquel la hauteur de coupe de consigne ($h_{soll}$) peut être réglée par un utilisateur, et une entrée de hauteur de coupe de consigne du premier circuit régulateur (15) sont reliés par l'intermédiaire d'un filtre passe-bas (24).

**6.** Procédé de commande d'un tablier de coupe (3) d'une machine de récolte automotrice (1) comprenant les étapes consistant à :

    a) détecter la hauteur de coupe réelle ($h_{ist}$) du tablier de coupe (3) et déduire un signal de correction de hauteur ($h_{korr}$) à l'aide de la hauteur de coupe réelle et d'une hauteur de coupe de consigne ($h_{soll}$) ;
    b) détecter la pression réelle ($p_{ist}$) au niveau d'un organe d'actionnement hydraulique (5) supportant le tablier de coupe (3) et déduire un signal de correction de pression ($p_{korr}$) à l'aide de la pression réelle ($p_{ist}$), d'une pression de consigne ($p_{soll}$) et du signal de correction de hauteur ($h_{korr}$) ;
    c) régler la pression au niveau de l'organe d'actionnement hydraulique (5) à l'aide du signal de correction de pression ($p_{korr}$), une partie intégrale du signal de correction de hauteur ($h_{korr}$) étant gelée lorsque le signal de correction de pression ($p_{korr}$) atteint une valeur limite prédéfinie.

**7.** Procédé selon la revendication 6, **caractérisé en ce que**, à l'étape c), le débit d'au moins un distributeur proportionnel (19, 20) est commandé proportionnellement au signal de correction de pression ($p_{korr}$).

Fig. 1

EP 2 679 086 B1

Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 3807610 A1
- EP 0786200 A2